**Europäisches Patentamt**

(19) **European Patent Office**

**Office européen des brevets**

(11) Veröffentlichungsnummer: **0 106 858**
**B1**

(12) **EUROPÄISCHE PATENTSCHRIFT**

(45) Veröffentlichungstag der Patentschrift:
**25.09.85**

(51) Int. Cl.⁴: **B 01 J 19/00**

(21) Anmeldenummer: **83901186.3**

(22) Anmeldetag: **25.04.83**

(86) Internationale Anmeldenummer:
**PCT/CH 83/00051**

(87) Internationale Veröffentlichungsnummer:
**WO 83/03778 (10.11.83** Gazette 83/26)

(54) **WECHSELSONDE.**

(30) Priorität: **26.04.82 CH 2509/82**

(43) Veröffentlichungstag der Anmeldung:
**02.05.84 Patentblatt 84/18**

(45) Bekanntmachung des Hinweises auf die Patenterteilung:
**25.09.85 Patentblatt 85/39**

(84) Benannte Vertragsstaaten:
**AT BE CH DE FR GB LI LU NL SE**

(56) Entgegenhaltungen:
**BE - A - 623 096**
**CH - A - 548 601**
**US - A - 3 498 323**

(73) Patentinhaber: **Bioengineering AG, Sagenrainstrasse 7, CH-8636 Wald (CH)**

(72) Erfinder: **MEYER, Pio, Sagenrainstrasse 7, CH-8636 Wald (CH)**

(74) Vertreter: **Salgo, Reinhold Caspar, Usterstrasse 139, CH-8621 Wetzikon 4 (CH)**

## Beschreibung

Die Erfindung betrifft eine Wechselsonde zum Einsatz in Reaktionsgefässe für chemische und mikrobiologische Prozesse.

In Reaktionsgefässen für mikrobiologische Prozesse, sogenannten Bio-Reaktoren oder Fermenten, ist die Zahl von Prozessvariablen verhältnismässig gross und schliesst diejenigen, die in Chemie-Reaktoren vorkommen, im allgemeinen ein. Solche Prozessvariablen sind beispielsweise Druck, Temperatur, pH, $pO_2$, $pCO_2$, Konzentrationen von prozessbestimmenden Ionen, Enzymen und weiteren interessierenden Metaboliten.

Während sich die Messung von Druck und Temperatur auf zumeist einfache, robuste und bewährte Messfühler stützt, ist die Messung der weiteren genannten Variablen der Überprüfung durch Nacheichen der betreffenden Messfühler bedürftig, da in solchen Messfühlern zumeist chemische und elektrochemische Prozesse ablaufen, die nicht den Grad der Wiederholbarkeit und der Konstanz aufweisen, wie beispielsweise die thermische Ausdehnung eines Gases. Ferner sind in Bio-Reaktoren Funktionsbehinderung der Sonden durch Bewuchs durch beispielsweise Pilze häufig; wegen der oft komplexen Konstruktion der Messfühler sind auch Ausfälle während des Betriebes nicht auszuschliessen.

Daraus ergibt sich das Bedürfnis, solche Sonden aus dem Reaktor zurückziehen zu können, entweder zur Nacheichung, zum Ersatz, oder weil vorübergehend Betriebszustände gefahren werden, die zu Beschädigung des Messfühlers Anlass geben können. Eine Konstruktion, die solches ermöglicht, wird Wechselsonde genannt. Der Messfühler ist erst der Teil, der die Sonde zum spezifischen Messinstrument macht. Eine im Handel befindliche Ausführung einer solchen Wechselsonde wird durch einen Kugelhahn, der an den Reaktor angeflanscht ist, in diesen eingeführt. Eine weitere, durch die CH-PS Nr. 548601 bekannte Ausführung weist ein integriertes Verschluss-System auf. Die Nachteile der bekannten Ausführungen von Wechselsonden, die durch die vorliegende Erfindung überwunden werden, sind insbesondere in folgendem zu sehen:

— Die Wechselsonden weisen so grosse Durchmesser auf, dass sie nur von besonderen — im allgemeinen durch den Sondenhersteller gelieferten — Stutzen aufgenommen werden können. Ist der Hersteller der Sonde nicht identisch mit dem Hersteller des Reaktors, so ist der besondere Stutzen nachträglich in den Reaktor einzuschweissen, was wegen der behördlichen Vorschriften über den Betrieb von Druckbehältern eine erneute Abnahme des Reaktors durch die hierfür beauftragte Amtsstelle erfordert.

— Wird die Sonde zur Nacheichung oder zum Ersatz des Messfühlers zurückgezogen, so gerät verhältnismässig viel von der Kulturbrühe, die sich im Reaktor befindet, in das Sondengehäuse und — falls es sich um den ersten genannten Typ handelt — auch in das Volumen des Kugelhahns.

— Beim Wiederöffnen des Kugelhahns läuft die in ihm enthaltene Brühe in den Reaktor. Enthält dieser aerobe Kulturen, so war der Kugelhahninhalt von der $O_2$-Zufuhr abgeschlossen und hat mittlerweile eine anaerobe Entwicklung durchgemacht, was entweder eine Veränderung des Metabolismus bewirkt, oder die betreffenden Organismen absterben lässt: Beides unerwünschte Vorgänge.

— Das Lumen des Kugelhahns lässt sich zudem, wenn die Kultur im Reaktor im Gange ist, nicht mehr sterilisieren.

— Die Sterilisation des Kugelhahns ist an sich mit Problemen behaftet, weil eine grosse Fläche dem direkten Kontakt mit dem Sterilisierdampf entzogen und das Einhalten der Sterilisationstemperatur schwer zu überprüfen ist.

— Die komplexe mechanische Gestalt der bekannten Wechselsonden birgt die Gefahr der Kontamination des Reaktorinhaltes — oder des Laboratoriums im Falle pathogener Kulturen — wegen unvollständiger Sterilisation, und bedingt zudem verhältnismässig grosse Totvolumina, mit der Folge von Verlust von Kulturbrühe oder unerwünschter Verdünnung derselben beim Wiedereinführen der Sonde.

Die erfindungsgemässe Wechselsonde ist demgegenüber gekennzeichnet durch einen ausserordentlich einfachen Aufbau, der zu einem minimalen Totvolumen führt, ferner dadurch, dass ihr Durchmesser so klein ist, dass sie durch einen Normalstutzen kleiner Nennweite — wie er praktisch an jedem Reaktor, ungeachtet des Herstellers, vorkommt — eingeführt werden kann, dass ferner alle Flächen, die mit dem Reaktorinhalt in Berührung kommen, sowohl mit dem Reaktor zusammen, als auch im zurückgezogenen Zustand in situ sterilisiert werden können. Kennzeichnend für die vorliegende Wechselsonde ist ferner, dass sowohl Einfahren als auch Zurückziehen durch eine einfache Längsbewegung in Achsenrichtung erfolgt, ohne Schraub- oder Drehbewegung, so dass ein automatisierter Betrieb wahlweise über hydraulische, pneumatiche oder elektrische Linearantriebe erfolgen kann. Ein solcher automatisierter Betrieb ist dann angezeigt, wenn der Betrieb des Reaktors selbst rechnergesteuert abläuft, und der Messfühler periodisch nachgeeicht werden muss (wie dies bei allen Messfühlern auf elektrochemischer Basis notwendig ist). Kennzeichnend ist es ferner für die vorliegende Erfindung, dass der Messfühler durch ein Probenahmegefäss ersetzt werden kann.

In der beiliegenden Zeichnung ist ein Ausführungsbeispiel des Erfindungsgedankens dargestellt. Es zeigen:

Fig. 1 ein Ausführungsbeispiel einer erfindungsgemässen Wechselsonde in zurückgezogener Stellung;

Fig. 2 das gleiche Ausführungsbeispiel wie Fig. 1, jedoch in eingefahrenem Zustande.

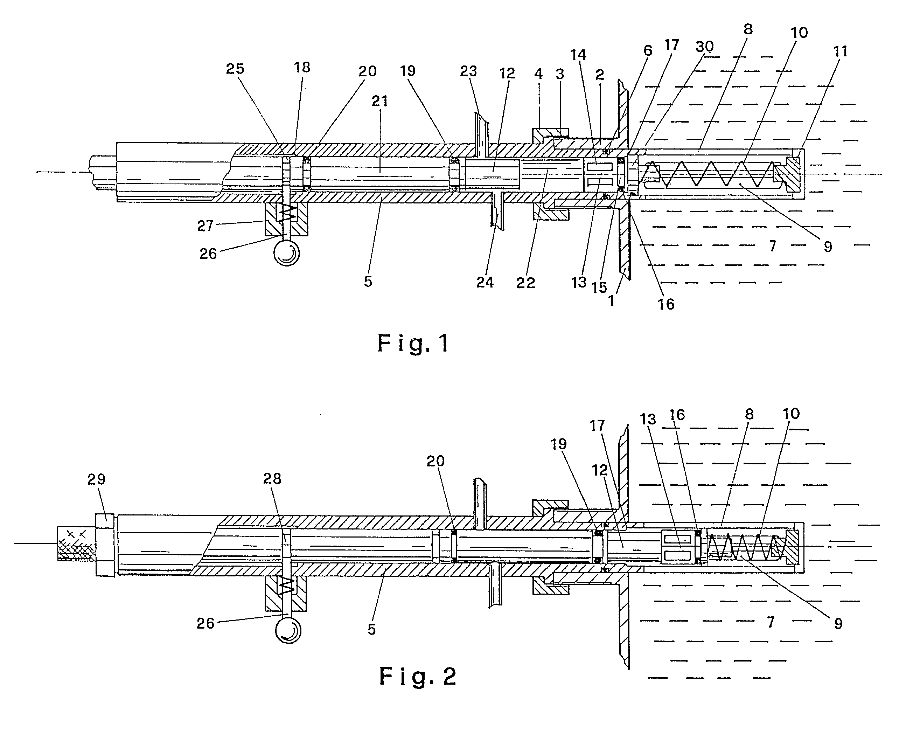

In Fig. 1 ist eine besondere Ausführung einer erfindungsgemässen Wechselsonde in zurückgezogener Stellung dargestellt. In die Wandung 1 eines Reaktors ist ein Normalstutzen 2 — beispielsweise ein Normalstutzen mit Nennweite 25 mm — eingeschweisst, der mit einem Gewinde 3 zur Aufnahme einer Überwurfmutter 4 versehen ist; Standard-Ausführung an Bio-Reaktoren oder Fermenten. In diesen Normalstutzen 2 ist der vordere Teil 8 des Gehäuses 5 der Wechselsonde eingeführt und mit einem O-Ring 6 abgedichtet. Der in die Kulturbrühe 7 hineinragende vordere Teil 8 des Gehäuses 5 ist mit vier breiten Längsschlitzen 9 versehen, so dass die Kulturbrühe 7 im wesentlichen frei durch diesen vorderen Teil 8 hindurchströmen kann. In den vorderen Teil 8 ist eine Schraubenfeder 10 eingesetzt, die sich nach vorne auf eine geeignet geformte Abschlussplatte 11 abstützt, nach hinten, also in Richtung eines Messfühlers 12, auf einen Verschlusszylinder 13. Der Verschlusszylinder 13 ist im hinteren Teil hohl und weist ebenfalls vier breite Längsschlitze 14 auf und im mittleren Teil eine Nut 15 zur Aufnahme eines O-Ringes 16, der gegen die Innenwand des vorderen Teils 8 dichtet. Anschlissend an die Nut 15 ist der Durchmesser des Verschlusszyklinders 13 so bemessen, dass er mit einer stufenförmigen Verengung des lichten Masses des vorderen Teils 8 am Übergang zum übrigen Teil des Gehäuses 5 einen Anschlag 17 bildet. In der Stellung der Wechselsonde gemäss Fig. 1 wirkt die Schraubenfeder 10 also zwischen der Abschlussplatte 11 und dem Anschlag 17. Die zum Dichten benötigten Anpresskräfte müssen nicht von der Schraubenfeder 10 aufgebracht werden, da sie in radialer Richtung wirken. Durch geeignete Aussparungen 30 im Anschlag 17 ist dafür gesorgt, dass in der Nut 15 kein nichtsterilisierbares Volumen entsteht. Die Innenfläche des Gehäuses 5 ist zwischen dem Anschlag 17 und einer Übergangsstufe 18 als Dichtfläche ausgebildet. In der gezeichneten Stellung der Wechselsonde entsteht zwischen dem O-Ring 16 und einem weiteren O-Ring 19, der auf einem axial verschiebbaren Schaft 21 sitzt, ein Volumen 22. Dieses wird gegen den Reaktor hin begrenzt vom Verschlusszylinder 13 und gegen den Schaft 21 vom Messfühler 12, der dichtend mit dem Schaft 21 verbunden ist. Dieses Volumen 22 kann sterilisiert werden, wozu durch eine Leitung 23 Dampf eingeblasen wird, der—zusammen mit dem entstehenden Kondensat — das Volumen 22 durch eine weitere Leitung 24 wieder verlässt. Die Leitungen 23, 24 können auch für die Nacheichung des Messfühlers 12 gebraucht werden: Dann wird das Volumen 22 durch eine Eichflüssigkeit oder ein Eichgas gefüllt. Eine weitere Verwendung der Leitungen 23 oder 24 ist folgende: Wird die Wechselsonde aus dem Reaktor zurückgezogen, so kann durch eine oder beide Leitungen 23, 24 sterile Luft oder steriler Sauerstoff eingeblasen werden, wodurch ein Eindringen von Kulturbrühe 7 in das Volumen 22 vollständig verhindert werden kann!

Eine nicht gezeichnete erfindungsgemässe Variante der Wechselsonde gemässe Fig. 1 enthält anstelle des Messfühlers 12 ein Probenahmegefäss. Damit kann ein definiertes Volumen Kulturbrühe dem Reaktionsgefäss entnommen werden; handelt es sich um eine pathogene Kultur, so kann das Innere des Volumens 22 — und damit das Äussere des Probenahmegefässes — mit chemischen Mitteln sterilisiert werden, ohne dass der Inhalt des genannten Probenahmegefässes darunter leidet. Der Schaft 21 ist hohl und führt die für den Betrieb des Messfühlers 12 notwendigen — nicht gezeichneten—elektrischen Leitungen. Auf dem Schaft 21 sitzt weiter hinten ein weiterer O-Ring 20, der vornehmlich Führungsaufgaben hat. In eingefahrenem Zustand der Wechselsonde (s. Fig. 2) ist das Stück des Schaftes 21, das zwischen den O-Ringen 19 und 20 liegt, ebenfalls sterilisierbar. Weiter rückwärts vom O-Ring 20 befindet sich am Schaft 21 eine Nut 25. In diese kann ein unter Federspannung stehender Stift 26 einrasten. Der Stift 26 sitzt in einer Führung 27, die am Gehäuse 5 angeflanscht ist. Rastet der Stift 26 in die Nut 25 ein, so ist der Schaft 21 in zurückgezogener Stellung in bezug auf seine axiale Bewegung verriegelt. Soll die Wechselsonde in den Reaktor eingefahren und in die in Fig. 2 gezeigte Stellung gebracht werden, so wird zunächst der Stift 26 zurückgezogen, worauf der Schaft längs vorgeschoben werden kann, bis das den Messfühler 12 umgebende Gehäuse auf den mit ihm durchmessergleichen Verschlusszylinder 13 auffährt; nun muss gegen die Spannung der Schraubenfeder 10 gearbeitet werden: Der Verschlusszylinder 13 wird vom Anschlag 17 abgehoben, der O-Ring 16 gibt seine Dichtungsfunktion auf (die vom O-Ring 19 übernommen wird), der Schaft 21 wird vorgeschoben, bis der Stift 26 in eine weitere, am Schaft 21 angebrachte Nut 28 eingreifen kann. Der Verschlusszylinder 13 wird also durch Vorschieben des Schaftes 21 vom Gehäuse des Messfühlers 12 gegen die Spannung der Schraubenfeder 10 in den vorderen Teil 8 des Gehäuses 5 verschoben.

Nun ist der Schaft 21 in eingefahrener Stellung in bezug auf seine axiale Stellung verriegelt.

Der axiale Weg, der dabei von der Nut 25 zurückgelegt wird und der dem Abstand der beiden Nuten 25 und 28 entspricht, setzt sich also zusammen aus der Länge des Volumens 22 und dem Weg, über den die Schraubenfeder 10 zusammengedrückt wird (dem Kompressionsweg der Schraubenfeder 10). In dieser Stellung ist der Messfühler 12 im vorderen Teil 8 des Gehäuses 5 und kann von der Kulturbrühe umspült werden. Gegen unbeabsichtiges Zurückfahren kann der Schaft 21 gesichert werden mittels einer Überwurfschraube 29, die am hinteren Ende des Gehäuses eingesetzt wird.

In einer Variante des Ausführungsbeispiels gemäss Fig. 1 und 2 ist der Durchmesser des Gehäuses des Messfühlers 12 um so viel kleiner als die lichte Weite des Verschlusszylinders 13, dass es bei axialer Verschiebung des Schaftes 21 in Richtung auf den Verschlusszylinder 13 nicht auf diesen auffährt, sondern in ihn zu liegen kommt. Auch hier gilt, dass anstelle des Messfühlers 12 ein geeignet ausgebildetes Probenahmegefäss treten kann.

In einer Variante des erfindungsgemässen Ausführungsbeispiels werden die Bewegungen sowohl des Stiftes 26 als auch des Schaftes 21 durch motorische Mittel vollzogen. In der Technik sind motorische Mittel, beispielsweise Linearantriebe verschiedenster Art bekannt, die sich für solche Bewegungen anbieten. Diese genannten motorischen Mittel sind bekannt und erhältlich auf der Basis elektrischen, hydraulischen und pneumatischen Antriebs.

## Patentansprüche

1. Wechselsonde zum Einsatz in Reaktionsgefässe für chemische und mikrobiologische Prozesse, dadurch gekennzeichnet, dass
— sie aus einem schlanken zylindrischen Gehäuse (5) besteht, dessen vorderer Teil (8) Längsschlitze (9) und auf der Stirnseite eine Abschlussplatte (11) aufweist und in das Innere des Reaktionsgefässes hineinragt,
— sich am Übergang vom vorderen Teil (8) zum übrigen Teil des Gehäuses (5) eine stufenförmige Verengung befindet,
— im vorderen Teil (8) eine Schraubenfeder (10) eingesetzt ist, die sich nach vorne auf die Abschlussplatte (11) nach hinten auf einen Verschlusszylinder (13) abstützt,
— dieser Verschlusszylinder (13) im hinteren Teil hohl ist und ebenfalls Längsschlitze (14) aufweist,
— der mittlere Teil des Verschlusszylinders (13) mit einer Nut (15) versehen ist, in der ein O-Ring (16) liegt,
— der Durchmesser jenes Teils des Verschlusszylinders (13), auf dem die Schraubenfeder (10) sich stützt, so bemessen ist, dass zwischen diesem genannten Teil des Verschlusszylinders (13) und dem Gehäuse (5) ein Anschlag (17) entsteht,
— der Teil des Verschlusszylinders (13) mit vergrössertem Durchmesser Aussparungen (30) aufweist,
— im Gehäuse (5) ein mit mindestens einem O-Ring (19, 20) versehener Schaft (21) eingesetzt ist, der im Gehäuse (5) in axialer Richtung beweglich ist,
— der Schaft (21) hohl ist zur Aufnahme von elektrischen Leitungen,
— das vordere Ende des Schaftes ausgebildet ist zur Aufnahme eines Messfühlers (12) oder eines Probenahmegefässes,
— der Schaft (21) zwei Nuten (25, 28) aufweist, in die ein Stift (26) einrasten kann, dessen Führung (27) mit dem Gehäuse (5) verbunden ist, wobei der Schaft (21) in zurückgezogener Stellung in bezug auf seine axiale Bewegung verriegelt ist, wenn der Stift (26) in die Nut (25) einrastet, und in eingefahrener Stellung, wenn der Stift (26) in die Nut (28) einrastet,
— der axiale Abstand der Nuten (25, 26) dem Kompressionsweg der Schraubenfeder (10) zuzüglich zur Länge des Volumens (22) entspricht,
— der Verschlusszylinder (13) — durch Vorschieben des Schaftes (21) — vom Gehäuse des Messfühlers (12) gegen die Spannung der Schraubenfeder (10) in den vorderen Teil (8) des Gehäuses (5) verschiebbar ist.

2. Wechselsonde nach Anspruch 1, dadurch gekennzeichnet, dass das Gehäuse des Messfühlers (12) oder des Probenahmegefässes in den hohlen Teil des Verschlusszylinders (13) zu liegen kommt.

3. Wechselsonde nach Anspruch 1, dadurch gekennzeichnet, dass das Gehäuse des Messfühlers (12) oder des Probenahmegefässes durchmessergleich ist mit dem hohlen Teil des Verschlusszylinders (13).

4. Wechselsonde nach Anspruch 1, dadurch gekennzeichnet, dass motorische Mittel die Bewegung des Stiftes (26) und des Schaftes (21) vornehmen.

5. Wechselsonde nach Anspruch 4, dadurch gekennzeichnet, dass die motorischen Mittel elektrischen Antrieb aufweisen.

6. Wechselsonde nach Anspruch 4, dadurch gekennzeichnet, dass die motorischen Mittel pneumatischen Antrieb aufweisen.

7. Wechselsonde nach Anspruch 4, dadurch gekennzeichnet, dass die motorischen Mittel hydraulischen Antrieb aufweisen.

## Claims

1. Test probe for insertion into reaction vessels for chemical and microbiological processes, characterized by comprising
— an elongated cylindrical housing (5), the nosepiece (8) of which is carrying slots (9) and having a terminal plate (11) and protruding into the inside of the reaction vessel,
— a necking between the nosepiece (8) and the rear part of the housing (5),
— a helical spring (10) which is inserted into the nosepiece (8) and having its front base at a terminal plate (11) and its rear base at a locking cylinder (13),
— a locking cylinder (13) being hollow in its rear portion and having elongated slots (14),
— an O-ring (16) sitting in a groove (15) around the intermediate portion of this said locking cylinder (13),
— the diameter of that part of the locking cylinder (13) where the helical spring has its rear base being dimensioned such as to produce a stop (17) between this said part of the locking cylinder (13) and the housing (5),
— this said wider region of this said locking cylinder (13) having grooves (30),
— a shaft (21) to perform an axial movement within the housing (5) and having at least one further O-ring (19, 20),
— a shaft (21) being hollow to accept electrical wiring,
— the front end of the shaft (21) suitably shaped to hold either a test probe (12) or a sampling receptacle at the same place,
— two grooves (25, 28) around the shaft (21) in which a pin (26) engages alternatively, the guide bearing (27) of this said pin (26) being flanged to the housing (5), whereby the shaft (4) is locked in the retracted position when the pin (26) engages in the groove (25) and locked in the inserted position when this said pin (26) engages in the groove (28),

— two grooves (25, 28) the distance of which equals the length of the volume (22) plus the path of compression of the helical spring (10),

— the said locking cylinder (13) to be displaced axially from the housing of the test probe (12) into the nosepiece (8) of the housing (5) against the tension of the helical spring (10).

2. Test probe according to Claim 1, characterized in that the housing of the test probe (12) or the sampling receptacle has its operating position within the hollow portion of the locking cylinder (13).

3. Test probe according to Claim 1, characterized in that the housing of the test probe (12) or the sampling receptacle has the same diameter as the hollow portion of the locking cylinder (13).

4. Test probe according to Claim 1, characterized in that it comprises powered means for the movement of the pin (26) and the shaft (21).

5. Test probe according to Claim 4, characterized in that the powered means are of electrical nature.

6. Test probe according to Claim 4, characterized in that the powered means are of pneumatic nature.

7. Test probe according to Claim 4, characterized in that the powered means are of hydraulic nature.


## Revendications

1. Sonde d'examen amovible destinée à être insérée dans des récipients de réaction pour procédés chimiques et microbiologiques, caractérisée par le fait

— qu'elle est constituée par un boîtier cylindrique effilé (5) dont la partie avant (8) présente des fentes longitudinales (9) et, sur la face frontale, une plaque de fermeture (11), ladite partie avant pénétrant à l'intérieur du récipient de réaction,

— qu'au niveau de la zone de transition entre la partie avant (8) et la partie restante du boîtier (5), se trouve un rétrécissement en forme de gradin,

— que, dans la partie avant (8), est monté un ressort hélicoïdal (10) qui prend appui, à l'avant, sur la plaque de fermeture (11) et, à l'arrière, sur un cylindre obturateur (13),

— que ledit cylindre obturateur (13) est creux à sa partie arrière et présente également des fentes longitudinales (14),

— que la partie médiane du cylindre obturateur (13) est pourvue d'une rainure (15) dans laquelle est lacé un joint torique (16),

— que le diamètre de la partie du cylindre obturateur (13) sur laquelle prend appui le ressort hélicoïdal (10) est calculé de façon qu'une butée (17) soit formée entre ladite partie précitée du cylindre obturateur (13) et le boîtier (5),

— que la partie du cylindre obturateur (13) de diamètre agrandi présente des évidements (30),

— que, dans le boîtier (5), s'engage une tige (21) munie d'au moins un joint torique (19, 20), ladite tige pouvant être déplacée dans le boîtier (5), suivant une direction axiale,

— que la tige (21) est creuse pour servir de logement à des conducteurs électriques,

— que l'extrémité avant de la tige est conformée pour recevoir un capteur de mesure (12) ou un récipient de prélèvement d'échantillon,

— que la tige (21) présente deux rainures (25, 28) dans lesquelles peut s'encastrer une goupille (26) dont le guide (27) est solidaire du boîtier (5), la tige (21) étant verrouillée vis-à-vis de son mouvement axial, dans sa position rétractée, lorsque la goupille (26) s'encastre dans la rainure (25) et, dans sa position insérée, lorsque la goupille (26) s'encastre dans la rainure (28),

— que la distance axiale entre les rainures (25, 26) correspond au trajet de compression du ressort hélicoïdal (10) augmenté de la longueur de l'espace (22),

— que, sous l'effet du coulissement vers l'avant de la tige (21), le cylindre obturateur (13) peut être déplacé par le boîtier du capteur (12) à l'encontre de la tension du ressort hélicoïdal (10), dans la partie avant (8) du boîtier (5).

2. Sonde amovible selon la revendication 1, caractérisée par le fait que le boîtier du capteur (12) ou du récipient de prélèvement d'échantillon vient se placer dans la partie creuse du cylindre obturateur (13).

3. Sonde amovible selon la revendication 1, caractérisée par le fait que le boîtier du capteur (12) ou du récipient de prélèvement d'échantillon est de même diamètre que la partie creuse du cylindre obturateur (13).

4. Sonde amovible selon la revendication 1, caractérisée par le fait que des organes d'actionnement assurent le déplacement de la goupille (26) et de la tige (21).

5. Sonde amovible selon la revendication 4, caractérisée par le fait que les organes d'actionnement comportent une commande électrique.

6. Sonde amovible selon la revendication 4, caractérisée par le fait que les organes d'actionnement comportent une commande pneumatique.

7. Sonde amovible selon la revendication 4, caractérisée par le fait que les organes d'actionnement comportent une commande hydraulique.

Fig. 1

Fig. 2

0 106 858